# NEUE EUROPÄISCHE PATENTSCHRIFT

(11) **EP 2 548 430 B2**
(45) Veröffentlichungstag und Bekanntmachung des Hinweises auf die Entscheidung über den Einspruch: **29.06.2022**
(45) Hinweis auf die Patenterteilung: 07.03.2018
(21) Anmeldenummer: 12166961.8
(22) Anmeldetag: 07.05.2012
(51) Int. Cl.: A01D 41/12, A01D 75/20, B60R 3/00, E06C 7/00

(54) **Selbstfahrende landwirtschaftliche Erntemaschine**
Self-propelled agricultural harvester
Moissonneuse agricole automatique

(30) Priorität: 18.07.2011 DE 102011051897
(43) Veröffentlichungstag der Anmeldung: 23.01.2013
(73) Patentinhaber: CLAAS Selbstfahrende Erntemaschinen GmbH, 33428 Harsewinkel (DE)
(72) Erfinder: Laumeier, Ludger, 33397 Rietberg (DE); Brüggemann, Daniel, 33442 Herzebrock-Clarholz (DE); Kammer, Horst, 33775 Versmold (DE); Lahmann, Dirk, 33790 Halle/Westf. (DE); Thöben, Rolf, Elter Straße 41 Rheine (DE)
(74) Vertreter: Bauer, Dirk

(56) Entgegenhaltungen:
- EP-B1- 2 172 366
- DE-A1- 19 620 072
- DE-C2- 10 034 379
- FR-A1- 2 704 045
- JP-A- 2000 177 479
- JP-A- 2000 177 479
- US-A1- 2007 290 475
- US-A1- 2008 100 023
- Betriebsanleitung "FENDT Katana 65", Seite 107

## Beschreibung

Die Erfindung betrifft eine selbstfahrende landwirtschaftliche Erntemaschine gemäß dem Oberbegriff des Anspruchs 1.

Bei selbstfahrenden landwirtschaftlichen Erntemaschinen wie Feldhäckslern oder Mähdreschern handelt es sich um technisch komplexe und damit in der Anschaffung teure Investitionsgüter. Da die Maschinen jeweils nur in verhältnismäßig kurzen Erntesaisons eingesetzt werden können, nämlich wenn die zu erntenden Früchte reif sind und auch weitere Erntebedingungen wie insbesondere Wettervoraussetzungen erfüllt sein müssen, werden die Maschinen innerhalb dieser kurzen verbleibenden Zeit hoch ausgelastet, um wirtschaftlich zu arbeiten. Die Erntemaschinen werden deshalb auch nachts betrieben.

Zur Ermöglichung eines Betriebs bei Dunkelheit sind die Erntemaschinen seit Jahren an der Fahrerkabine mit Scheinwerfern und sonstigen Beleuchtungselementen versehen. Die Scheinwerfer sind in der Regel an das Kabinendach angebaut oder unterhalb der Frontschutzscheibe an der Kabine angebracht, um von dort die Arbeitsumgebung, insbesondere den Erntebestand und die seitliche Maschinenumgebung, in der sich beispielsweise begleitende Ladefahrzeuge befinden können, auszuleuchten.

Aufgrund der großen Maschinenbauhöhe sowie aus Gründen der besseren Übersicht über den bis zu mehrere Meter hohen Erntebestand sind die Fahrerkabinen relativ hoch (beispielsweise zwei Meter über dem Boden) an der Erntemaschine angeordnet und über einen Aufstieg zugänglich, über den der Fahrer von Bodenhöhe in die bis zu mehrere Meter hoch befindliche Fahrerkabine hinaufsteigen kann. Zu Fahrtbeginn und zu Fahrtende, aber auch im Laufe des Erntebetriebs muss der Fahrer aus verschiedenen Gründen (Fahrerwechsel, Ruhepausen, Störungen im Erntebetrieb, Wartungsarbeiten an der Maschine etc.) diesen Aufstieg hinauf bzw. hinabsteigen. Bei Dunkelheit ganz allgemein - sei diese nachtbedingt, wetterbedingt, durch erntebedingte Luftverschmutzung hervorgerufen oder umgebungsbedingt, zum Beispiel nach Abstellen der Maschine innerhalb einer unbeleuchteten Halle - ist dies unkomfortabel und aufgrund der Steilheit des Aufstiegs gefährlich, insbesondere wenn der Fahrer nach langer Arbeitszeit übermüdet ist. Herkömmliche, an der Kabine angebrachte Scheinwerfer sorgen nur für eine unzureichende Ausleuchtung des Aufstiegs, da allenfalls der obere Bereich des Aufstiegs von oben beleuchtbar ist. Beim Hinaufsteigen sorgen die von oben leuchtenden Scheinwerfer sogar für eine Blendung des hinaufkletternden Fahrers. Aus der DE 19620072 A1 ist eine Erntemaschine mit den Merkmalen des Oberbegriffes bekannt. Die Druckschrift US 2008/0100023 A1 offenbart einen Pickup Truck mit einer klappbaren Stufe, in deren Klappgelenken jeweils ein Beleuchtungsmittel zur Beleuchtung der Stufe eingebaut ist.

Die Druckschrift US 2007/0290475 A1 offenbart ein Fahrzeug mit Stufen, an deren Stirnflächen jeweils eine Flächenleuchte angebracht ist.

Es ist daher eine Aufgabe der vorliegenden Erfindung, eine Erntemaschine der genannten Art anzugeben, deren Fahrerkabine bei unterschiedlichen Umgebungsbedingungen, insbesondere bei Dunkelheit, einfacher und sicherer zugänglich ist.

Die Aufgabe wird gelöst durch eine Erntemaschine mit den Merkmalen des Anspruchs 1. Diese umfasst einen Aufstieg, in den mehrere der Beleuchtung des Aufstiegs dienende Beleuchtungselemente integriert sind, wobei die Stufen zumindest teilweise lichtdurchlässig ausgeführt sind. Hierdurch wird durch eine Integration mehrerer Beleuchtungselemente in den Aufstieg eine geeignete Ausleuchtung des Aufstiegs ermöglicht, da sich die Beleuchtungselemente bedarfsgerecht platzieren lassen, so dass eine gezielte Beleuchtung auch schlecht vom Umgebungslicht und/oder Arbeitslicht erfasster Bereiche des Aufstiegs möglich ist. Durch die gezielte Platzierung besteht ein kurzer Abstand zwischen Lichtquelle und zu beleuchtendem Bereich des Aufstiegs. Daher kann bereits mit verhältnismäßig geringer Lichtleistung der Beleuchtungselemente eine für den Fahrer hinreichende Ausleuchtung des Aufstiegs gewährleistet werden. Der Fahrer wird schon deshalb kaum mehr geblendet. Weiterhin ist der Energieverbrauch der Beleuchtung wegen des geringen Leistungsbedarfs gering, was insbesondere bei Nutzung der Beleuchtung im ausgeschalteten Maschinenzustand der Erntemaschine (Nichtbetrieb eines das Bordnetz speisenden Stromgenerators) von vorteilhafter Bedeutung ist, also beispielsweise wenn der Fahrer bei Dunkelheit die stehende Maschine besteigen oder verlassen will.

Eine geeignete Anordnung und Ausrichtung der Beleuchtungselemente kann in vorteilhafter Weise ein Blenden des Fahrers ganz vermeiden. Bei den Beleuchtungselementen handelt es sich zweckmäßigerweise jeweils um eine elektrische Lampe, vorzugsweise eine verbrauchsarme Licht emittierende Diode (LED).

Zweckmäßigerweise umfasst der Aufstieg mehrere treppenartig zueinander angeordnete Stufen. Diese können auf unterschiedliche Weise an der Erntemaschine angeordnet sein, insbesondere können diese rahmenfest angebracht oder zumindest teilweise an schwenk- und/oder schiebebeweglichen Halteelementen gegenüber dem Rahmen der Erntemaschine gelagert sein.

In vorteilhafter Weiterbildung der Erfindung sind die Beleuchtungselemente jeweils einer oder mehreren Stufen zugeordnet, um diese zu beleuchten. Eine derartige Zuordnung entwickelt den Grundgedanken einer lokalen Beleuchtung vorteilhaft weiter, wonach die bei Dunkelheit für den Fahrer funktional bedeutenden Stufen des Aufstiegs gezielt beleuchtet werden.

Da der Aufstieg in der Regel eine Vielzahl von Stufen aufweist, sind erfindungsgemäß mehrere Beleuchtungselemente vorgesehen, die zur Beleuchtung unterschiedlicher Stufen über den Aufstieg verteilt angeordnet sind. Durch eine verteilte Anordnung lässt sich eine insgesamt etwa gleichmäßige Beleuchtung des Aufstiegs erreichen, was aus Sicherheitsaspekten anzustreben ist.

Wie bereits ausgeführt, kann ein Beleuchtungselement einer oder mehreren Stufen zu deren Beleuchtung zugeordnet sein. Die Erfindung sieht vor, dass die Stufen zumindest teilweise lichtdurchlässig ausgeführt sind. Durch eine teilweise lichtdurchlässige Ausführung kann auf einfache Weise die Beleuchtung mehrerer (zumindest zweier) Stufen mittels nur eines Beleuchtungselements erreicht werden.

Zweckmäßigerweise ist das zumindest eine Beleuchtungselement jeweils oberhalb einer oder mehrerer zu beleuchtender Stufen angeordnet. Eine Anordnung oberhalb der Stufen sorgt für eine Beleuchtung der Stufen jeweils von oben, wodurch die Trittfläche vorteilhaft ausgeleuchtet ist, ohne dass der Fahrer beim Auf- oder Absteigen unnötig geblendet wird. Dabei kann das Beleuchtungselement mittig oder seitlich oberhalb der zu beleuchtenden Stufe (n) angeordnet sein.

Eine besonders robuste Ausführung ist gewährleistet, wenn das zumindest eine Beleuchtungselement jeweils so hoch über einer zu beleuchtenden Stufe angeordnet ist, dass beim Aufsetzen auf die Stufe mit einem Schuh eine Berührung des Beleuchtungselements ausgeschlossen ist. Ein versehentliches "Treten" gegen das Beleuchtungselement wird so vorteilhaft vermieden.

Gemäß der Erfindung ist vorgesehen, dass das zumindest eine Beleuchtungselement zur Beleuchtung einer Stufe an einer Unterseite einer über dieser Stufe angeordneten Stufe angeordnet ist. In diesem Fall beleuchtet also quasi die Unterseite einer Stufe die Oberseite einer darunterliegenden Stufe, wodurch sonstige Montageorte für die Beleuchtungselemente entfallen.

Die beschriebene Erfindung kommt insbesondere an einer Erntemaschine zum Einsatz, bei der sich der Aufstieg im Bereich eines Vorderrads der Erntemaschine befindet. Der Aufstieg kann sich zumindest bereichsweise über einen Kotflügel eines Rads der Erntemaschine erstrecken. Bei der Erntemaschine handelt es sich insbesondere um einen Feldhäcksler oder um einen Mähdrescher.

Während die erfindungsgemäße Beleuchtung des Aufstiegs ganz allgemein zum Zweck der besseren Sichtbarkeit des Aufstiegsbereichs dient, kann der Beleuchtung zudem auch die Funktion einer Anzeige zukommen. Vorteilhaft dient das zumindest eine Beleuchtungselement als Anzeige für einen Betriebs-oder Nichtbetriebszustand der Erntemaschine oder ein sonstiges Ereignis. Durch entsprechende Schaltung des zumindest einen Beleuchtungselements kann der Fahrer bereits aus weiter Entfernung von der Maschine einen Maschinenzustand und/oder sonstige Ereignisse anhand des Leuchtzustands des Beleuchtungselements erkennen.

Beispielsweise könnte der Schließzustand der Erntemaschine angezeigt werden, indem bei nicht verschlossener Kabinentür das zumindest eine Beleuchtungselement eingeschaltet ist, während es bei verschlossener Kabinentür ausgeschaltet ist. Ein entsprechender Türkontaktschalter zur Erfassung des Türzustands liefert in diesem Fall das auslösende Signal für die Beleuchtungsschaltung.

Gemäß einer einfachen Weiterbildung könnte die Beleuchtung gekoppelt sein an das Ereignis der Ein- und Ausschaltung des vorhandenen Arbeitslichts. Die Beleuchtung des Aufstiegs wäre in diesem Fall gleichgeschaltet mit dem Arbeitslicht, wodurch sich eine zusätzliche Schaltung erübrigt und dafür gesorgt ist, dass die Beleuchtung des Aufstiegs automatisch immer dann aktiviert ist, wenn auch die Arbeitsumgebung beleuchtet ist.

Weiterhin könnte über die Beleuchtungselemente des Aufstiegs der Schaltzustand eines an der Erntemaschine vorhandenen Batterietrennschalters angezeigtwerden. Dadurch könnte der Fahrer bereits aus Entfernung daran erinnert werden, vor (bzw. nach) einem Ernteeinsatz den Batterietrennschalter zu betätigen, der die Hauptstromversorgung der Erntemaschine herstellt (bzw. trennt). Da der Batterietrennschalter vor längerem Verlassen der Maschine oder vor Wartungs-/Reparaturarbeiten an der Maschine aus Sicherheitsgründen geöffnet werden sollte, trägt eine solche Anzeigemöglichkeit allgemein zur Steigerung der Maschinensicherheit bei.

Gemäß einer weiteren Ausgestaltung ist das zumindest eine Beleuchtungselement an einen Bewegungsmelder gekoppelt, so dass bei Annäherung einer Person an die Erntemaschine ein automatisches Einschalten der Beleuchtung erfolgt.

Eine Kopplung der Beleuchtung an einen Helligkeitssensor kann weiterhin vorteilhaft sein, wonach ein Einschalten automatisch bei Unterschreiten einer vorgebbaren Umgebungshelligkeit erfolgt, bzw. umgekehrt ein Ausschalten bei Überschreiten dieser Helligkeit. Weitere Möglichkeiten für die Anzeige von Maschinenzuständen bzw. Ereignissen sind denkbar.

Vorteilhaft ist das zumindest eine Beleuchtungselement für eine bestimmte Zeitdauer einschaltbar. Eine solche Zeitschaltung kann sich für zuvor genannte Anzeigefunktionen anbieten, um jeweils sicherzustellen, dass der Beleuchtungszustand irgendwann wieder automatisch endet. Dies ist insbesondere dann zweckmäßig, wenn die Erntemaschine nicht in Betrieb ist.

Bei Vorhandensein mehrerer Beleuchtungselemente kann vorteilhafte vorgesehen sein, dass die mehreren Beleuchtungselemente einzeln oder gruppenweise schaltbar sind. Demnach müssen die Beleuchtungselemente nicht stets zusammen ein- oder ausgeschaltet werden, sondern es kann bedarfsabhängig eine Schaltung nur einzelner oder gruppenzugehöriger Beleuchtungselemente erfolgen. Eine Steuerungseinrichtung, die eine solche individuelle Schaltung durchführt, ist zweckmäßig. Durch einzelnes oder gruppenweises Schalten könnten auf diese Weise sogar noch differenziertere (z. B. kodierte) Informationen mittels der Beleuchtungselemente angezeigt werden, um Maschinenzustände und/oder sonstige Ereignisse nach außen sichtbar zu machen.

Zur Gewährleistung einer Schaltung der Beleuchtung aus Entfernung von der Erntemaschine ist vorteilhaft das zumindest eine Beleuchtungselement über eine Fernbedienung schaltbar. Die Schaltung kann dabei gekoppelt sein an einen Ver-/Entriegelungsmechanismus der Erntemaschine, so dass beispielsweise bereits mit einem "Aufschließsignal" auch die Beleuchtung des Aufstiegs aktiviert wird, wodurch der Fahrer geleitet von der als Wegweiser ("Pathfinder") dienenden Aufstiegsbeleuchtung sicher zur Maschine findet und diese besteigen kann. Umgekehrt kann zusammen mit einem "Abschließsignal" eine zeitlich begrenzte Nachbeleuchtung des Aufstiegs vorgesehen sein, um dem Fahrer das Verlassen der Maschine bei Dunkelheit zu erleichtern.

Grundsätzlich kann die Schaltung der beschriebenen Beleuchtung manuell (z.B. Handschalter) und/oder automatisiert (gekoppelt an Sensorzustände oder an Zeitschalter) erfolgen. Gemäß einer vorteilhaften Weiterentwicklung kann das zumindest eine Beleuchtungselement auch im Rahmen eines programmierbaren Ablaufs schaltbar sein. In diesem Fall ist die Schaltung des zumindest einen Beleuchtungselements in einen frei programmierbaren Programmablauf eingebunden, so dass dessen Schaltung koordiniert mit anderen Vorgängen an der Erntemaschine erfolgt.

Die Erfindung wird im Folgenden unter Hinweis auf die beigefügten Figuren anhand eines Ausführungsbeispiels näher erläutert. Daraus ergeben sich auch weitere Einzelheiten und Vorteile der Erfindung.

Es zeigen:
- Fig. 1: eine schematische Seitenansicht eines Feldhäckslers,
- Fig. 2: eine Teilansicht eines Feldhäckslers in perspektivischer Darstellung.

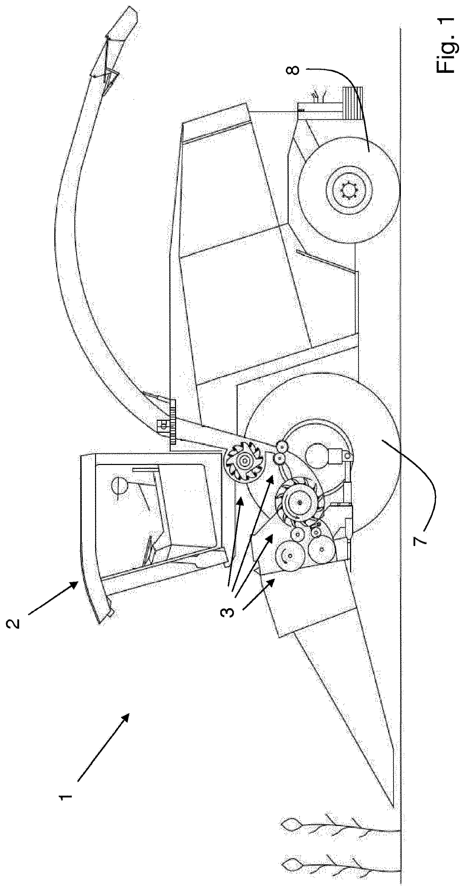

Fig. 1 zeigt in schematischer Seitenansicht eine selbstfahrende landwirtschaftliche Erntemaschine in Form eines Feldhäckslers 1. Der Feldhäcksler 1 ist zur Fahrt über Felder und Straßen mit drehbar angetriebenen Vorderrädern 7 und lenkbaren Hinterrädern 8 ausgestattet. Eine Fahrerkabine 2, die Platz bietet für einen Bediener des Feldhäckslers 1, ist oberhalb von Arbeitsaggregaten 3 des Feldhäckslers 1 angeordnet. Der Boden der Kabine 2 befindet sich in etwa 2m Höhe über dem Erdboden, so dass dem in der Kabine 2 sitzenden Fahrer eine gute Übersicht über vor dem Feldhäcksler 1 stehenden Pflanzenbestand gewährt wird. Der Feldhäcksler 1 ist mit für sich bekannten - und daher nicht im Einzelnen bezeichneten - Arbeitsaggregaten 3 (Einzugs- und Vorpresseinrichtung, Häckselaggregat, Nachzerkleinerungseinrichtung, Nachbeschleuniger) ausgestattet. Bei der Fahrt über ein Feld schneidet ein Erntevorsatzgerät auf dem Feld stehenden Pflanzenbestand ab und führt diesen den Arbeitsaggregaten 3 zu. In den Arbeitsaggregaten wird das Erntegut weiterverarbeitet, insbesondere gehäckselt und nachzerkleinert, um anschließend beschleunigt durch eine Überladeeinrichtung zur Verladung in einen mitfahrenden (nicht gezeigten) Transportbehälter geworfen zu werden.

Da bei Feldhäckslern wie auch bei anderen selbstfahrenden Erntemaschinen - wie beispielsweise Mähdreschern - die Fahrerkabine verhältnismäßig hoch, nämlich oberhalb der Vorderräder angeordnet ist, weisen diese Erntemaschinen in der Regel einen Aufstieg auf, über welchen die Fahrerkabine zugänglich ist.

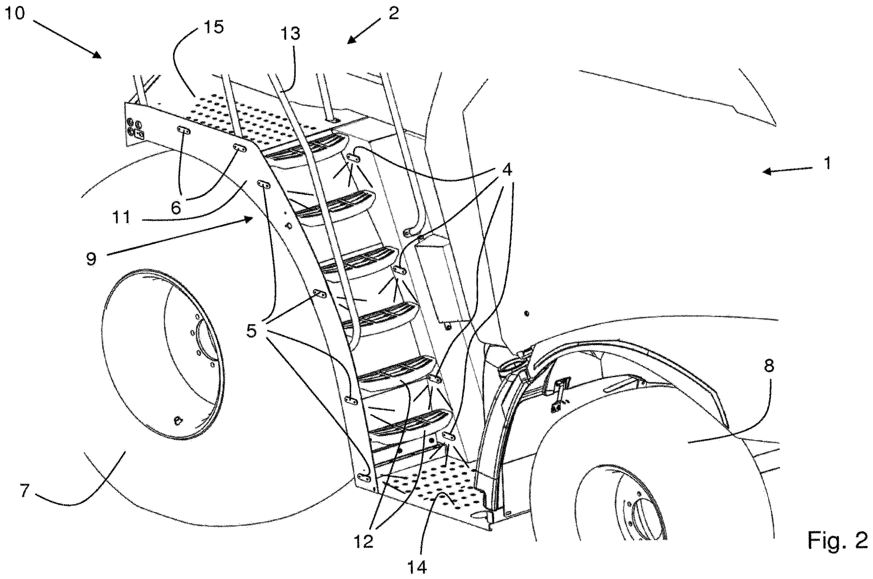

Fig. 2 zeigt ein Ausführungsbeispiel eines Feldhäckslers 1 mit einem solchen Aufstieg 10. Zu sehen ist eine Teilansicht eines Feldhäckslers 1 in perspektivischer Darstellung von schräg hinten links. Der dargestellte Feldhäcksler 1 kann in seiner grundsätzlichen Funktion einem Feldhäcksler wie in Fig. 1 beschrieben, entsprechen.

Bei dem in Fig. 2 gezeigten Feldhäcksler 1 befindet sich zwischen einem großen Vorderrad 7 und einem demgegenüber kleineren Hinterrad 8 ein unteres Trittblech 14, das Teil des Aufstiegs 10 ist. An das untere Trittblech 14 schließt sich ein Aufstiegsrahmen 11 an, der sich über einen Kotflügel 9 des Vorderrads 7 hin nach oberhalb des Vorderrads 7 erstreckt. In einem Bereich über dem Vorderrad 7 ist eine Empore 15 ausgebildet, die als Standfläche dient. Eine seitlich unmittelbar an die Empore 15 angrenzende, in Fig. 2 nur durch einen Pfeil angedeutete Fahrerkabine 2 ist über die Empore 15 zugänglich. Ein Geländer 13 ist am Aufstiegsrahmen 11 befestigt.

An dem Aufstiegsrahmen 11 sind sechs Stufen 12 befestigt, die eine Treppe bilden, über die sich die Empore 15 vom unteren Trittblech 14 aus ersteigen lässt. Die Stufen 12 sind im gezeigten Ausführungsbeispiel nicht aus Vollmaterial, sondern sind im Sinne eines Trittrostes gefertigt. Sie lassen daher Schmutz nach unten abfallen und sind teilweise lichtdurchlässig. In den Aufstieg 10 ist eine Vielzahl von Beleuchtungselementen 4, 5, 6 integriert, die der Beleuchtung des Aufstiegs 10 dienen. Es handelt sich bei den Beleuchtungselementen 4, 5, 6 um Lampen, die als Licht emittierende Dioden (LED) ausgeführt sein können und die - wie teils durch Striche angedeutet - gemeinsam für eine Beleuchtung des Aufstiegs 10 sorgen. Im gezeigten Ausführungsbeispiel strahlen die Beleuchtungselemente jeweils 4, 5, 6 vorrangig nach unten ab, um jeweils darunter liegende Stufen 12 zu beleuchten. Durch das Abstrahlen nach unten werden Blendwirkungen weitestgehend vermieden. Alternativ können die Beleuchtungselemente 4, 5, 6 jeweils auch einen weiteren Abstrahlwinkel haben, der eine Beleuchtung des Aufstiegs 10 ermöglicht.

Im gezeigten Beispiel befinden sich vier Beleuchtungselemente 4 auf der rechten Seite des Aufstiegsrahmens 11 und sind in diesen integriert. Auf der gegenüberliegenden linken Seite des Aufstiegsrahmens 11 sind ebenfalls vier in den Aufstiegsrahmen 11 integrierte Beleuchtungselemente 5 angeordnet. Zusätzlich sind zwei Beleuchtungselemente 6 vorgesehen, die in eine obere Seitenwand des Aufstiegsrahmens 11 integriert sind. Die Beleuchtungselemente 5 und 6 können nach innen ausgerichtet sein, um den Aufstieg 10 nach innen, d.h. zum Feldhäcksler 1 hin, zu beleuchten. Alternativ oder ergänzend können die Beleuchtungselemente 5 und 6 außen ausgerichtet sein, d.h. vom Feldhäcksler 1 weg, so dass der Aufstieg 10 bei Dunkelheit bereits aus weiter Entfernung erleuchtet wird.

Die oberen drei der Beleuchtungselemente 4 und 5 sind jeweils einer oder mehreren darunterliegenden Stufen 12 zugeordnet. Die Beleuchtungselemente sind dabei jeweils so hoch über einer zu beleuchtenden Stufe 12 angeordnet, dass beim Aufsetzen auf die Stufe 12 mit einem Schuh eine Berührung und damit eine Beschädigung des Beleuchtungselements 4, 5 ausgeschlossen ist. Da die Stufen 12 teilweise lichtdurchlässig sind, beleuchtet ein Beleuchtungselement 4, 5 nicht nur eine unmittelbar darunter liegende Stufe 12, sondern auch eine wiederum darunter liegende Stufe 12. Die unteren der Beleuchtungselemente 4 und 5 dienen zur Beleuchtung des unteren Trittblechs 14 bzw. des Feldbodens/Straßenbelags.

Alternativ zu der gezeigten Anordnung, bei der die Beleuchtungselemente 4, 5 in jeweils seitlich die Stufen 12 begrenzende Abschnitte des Aufstiegsrahmens 11 integriert sind, sind Beleuchtungselemente erfindungsgemäß jeweils in eine Unterseite einer Stufe 12 integriert, um so eine darunter liegende Stufe zu beleuchten. In diesem Fall entfiele ein Einbau des jeweiligen Beleuchtungselements in den Aufstiegsrahmen 11. In vorteilhafter Weise weisen die im Ausführungsbeispiel gezeigten Beleuchtungselemente 4, 5, 6 nicht nur die Funktion auf, den Aufstieg 10 zu beleuchten, um einen sicheren Zutritt für den Fahrer zu gewähren, sondern dienen darüber hinaus als Anzeige für einen Betriebs- oder Nichtbetriebszustand des Feldhäckslers 1 oder für ein sonstiges Ereignis. Die Beleuchtungselemente 4, 5, 6 sind dazu an eine Steuerungseinrichtung angeschlossen. Die Steuerungseinrichtung kann beispielsweise von einer Funkfernbedienung betätigt werden, die auch zum Auf- bzw. Abschließen des Feldhäckslers 1 dient. Kommt der Fahrer am Feldhäcksler 1 an, so kann er zum einfacheren Auffinden der Maschine und zum sicheren Hinaufklettern einfach die Beleuchtung aktivieren, indem er per Fernbedienung die Fahrerkabine 2 entriegelt, wobei an dieses Ereignis (Türentriegelung) gekoppelt automatisch auch die Beleuchtung des Aufstiegs 10 eingeschaltet wird. Auf ähnliche Weise kann vorgesehen sein, dass die Beleuchtung nach dem Abschließen des Feldhäckslers aktiviert wird, um dem Fahrer ein sicheres Verlassen der Maschine zu gewähren.

### Bezugszeichenliste

- 1: Feldhäcksler
- 2: Fahrerkabine
- 3: Arbeitsaggregate
- 4: Beleuchtungselement
- 5: Beleuchtungselement
- 6: Beleuchtungselement
- 7: Vorderrad
- 8: Hinterrad
- 9: Kotflügel
- 10: Aufstieg
- 11: Aufstiegsrahmen
- 12: Stufe
- 13: Geländer
- 14: unteres Trittblech
- 15: Empore

## Patentansprüche

1. Selbstfahrende landwirtschaftliche Erntemaschine (1) mit einer Fahrerkabine (2), die über einen Aufstieg (10) zugänglich ist, wobei der Aufstieg (10) mehrere treppenartig zueinander angeordnete Stufen (12) umfasst, wobei in den Aufstieg (10) mehrere der Beleuchtung des Aufstiegs (10) dienende Beleuchtungselemente (4, 5, 6) integriert sind, die jeweils einer oder mehreren Stufen zugeordnet sind, um diese zu beleuchten, und die zur Beleuchtung unterschiedlicher Stufen (12) über den Aufstieg (10) verteilt angeordnet sind, wobei die Stufen (12) zumindest teilweise lichtdurchlässig ausgeführt sind, **dadurch gekennzeichnet, dass** das zumindest eine Beleuchtungselement (4, 5) zur Beleuchtung einer Stufe an einer Unterseite einer über dieser Stufe angeordneten Stufe angeordnet ist.

2. Erntemaschine nach Anspruch 1, **dadurch gekennzeichnet, dass** das zumindest eine Beleuchtungselement (4, 5, 6) jeweils oberhalb einer oder mehrerer zu beleuchtender Stufen (12) angeordnet ist.

3. Erntemaschine nach einem der vorigen Ansprüche, **dadurch gekennzeichnet, dass** das zumindest eine Beleuchtungselement (4, 5) jeweils so hoch über einer zu beleuchtenden Stufe (12) angeordnet ist, dass beim Aufsetzen auf die Stufe (12) mit einem Schuh eine Berührung des Beleuchtungselements (4, 5) ausgeschlossen ist.

4. Erntemaschine nach einem der vorigen Ansprüche, **dadurch gekennzeichnet, dass** sich der Aufstieg (10) im Bereich eines Vorderrads (7) der Erntemaschine (1) befindet.

5. Erntemaschine nach einem der vorigen Ansprüche, **dadurch gekennzeichnet, dass** sich der Aufstieg (10) zumindest bereichsweise über einen Kotflügel (9) eines Rads (7) der Erntemaschine (1) erstreckt.

6. Erntemaschine nach einem der vorigen Ansprüche, **dadurch gekennzeichnet, dass** es sich bei der Erntemaschine (1) um einen Feldhäcksler oder um einen Mähdrescher handelt.

7. Erntemaschine nach einem der vorigen Ansprüche, **dadurch gekennzeichnet, dass** das zumindest eine Beleuchtungselement (4, 5, 6) als Anzeige für einen Betriebs- oder Nichtbetriebszustand der Erntemaschine (1) oder ein sonstiges Ereignis dient.

8. Erntemaschine nach einem der vorigen Ansprüche, **dadurch gekennzeichnet, dass** das zumindest eine Beleuchtungselement (4, 5, 6) für eine bestimmte Zeitdauer einschaltbar ist.

9. Erntemaschine nach einem der vorigen Ansprüche, **dadurch gekennzeichnet, dass** mehrere Beleuchtungselemente (4, 5, 6) einzeln oder gruppenweise schaltbar sind.

10. Erntemaschine nach einem der vorigen Ansprüche, **dadurch gekennzeichnet, dass** das zumindest eine Beleuchtungselement (4, 5, 6) über eine Fernbedienung schaltbar ist.

11. Erntemaschine nach einem der vorigen Ansprüche, **dadurch gekennzeichnet, dass** das zumindest eine Beleuchtungselement (4, 5, 6) im Rahmen eines programmierbaren Ablaufs schaltbar ist.

## Claims

1. A self-propelled agricultural harvester (1) comprising a driver's cab (2) accessible by way of a climbing means (10), wherein the climbing means (10) has a plurality of steps (12) arranged staircase-like relative to each other, wherein integrated into the climbing means (10) is a plurality of lighting elements (4, 5, 6) which serve to light the climbing means (10) and which are respectively associated with one or more steps in order to light same and which are arranged distributed over the climbing means (10) to light different steps (12), wherein the steps (12) are at least partially translucent, **characterised in that** the at least one lighting element (4, 5) for lighting a step is arranged at an underside of a step arranged above said step.

2. A harvester according to claim 1 **characterised in that** the at least one lighting element (4, 5, 6) is respectively arranged above one or more steps (12) to be lit.

3. A harvester according to one of the preceding claims **characterised in that** the at least one lighting element (4, 5, 6) is respectively arranged so high above a step (12) to be lit that when placing a shoe on the step (12) contact with the lighting element (4, 5) cannot occur.

4. A harvester according to one of the preceding claims **characterised in that** the climbing means (10) is disposed in the region of a front wheel (7) of the harvester (1).

5. A harvester according to one of the preceding claims **characterised in that** the climbing means (10) extends at least region-wise over a mudguard (9) of a wheel (7) of the harvester (1).

6. A harvester according to one of the preceding claims **characterised in that** the harvester (1) is a forage harvester or a combine harvester.

7. A harvester according to one of the preceding claims **characterised in that** the at least one lighting element (4, 5, 6) serves as a indication for an operative or inoperative state of the harvester (1) or another event.

8. A harvester according to one of the preceding claims **characterised in that** the at least one lighting element (4, 5, 6) can be switched on for a given period of time.

9. A harvester according to one of the preceding claims **characterised in that** a plurality of lighting elements (4, 5, 6) can be switched individually or groupwise.

10. A harvester according to one of the preceding claims **characterised in that** the at least one lighting element (4, 5, 6) is switchable by way of a remote control.

11. A harvester according to one of the preceding claims **characterised in that** the at least one lighting element (4, 5, 6) is switchable in the context of a programmable procedure.

## Revendications

1. Machine agricole de récolte automotrice (1) comprenant une cabine de conduite (2) qui est accessible par un moyen de montée (10), le moyen de montée (10) comportant plusieurs marches (12) disposées les unes par rapport aux autres à la façon d'un escalier, plusieurs éléments d'éclairage (4, 5, 6) qui servent à éclairer le moyen de montée (10) étant intégrés dans le moyen de montée (10), les plusieurs éléments d'éclairage (4, 5, 6) étant chacun associés à une ou plusieurs marches afin de les éclairer et, pour éclairer différentes marches (12) étant disposés de manière répartie sur le moyen de montée (10), les marches (12) étant conçues au moins en partie pour laisser passer la lumière, **caractérisée en ce que** le au moins un élément d'éclairage (4, 5) est disposé pour éclairer une marche au-niveau de la sous-face d'une marche disposée au-dessus de cette marche.

2. Machine de récolte selon la revendications 1, **caractérisée en ce qu'**à chaque fois le au moins un élément d'éclairage (4, 5, 6) est disposé au-dessus d'une ou plusieurs marches à éclairer (12).

3. Machine de récolte selon une des revendications précédentes, **caractérisée en ce qu'**à chaque fois le au moins un élément d'éclairage (4, 5) est disposé à une hauteur suffisante au-dessus d'une marche à éclairer (12) pour exclure tout contact avec l'élément d'éclairage (4, 5) quand on accède à la marche (12) avec une chaussure.

4. Machine de récolte selon une des revendications précédentes, **caractérisée en ce que** le moyen de montée (10) se trouve dans la zone d'une roue avant (7) de la machine de récolte (1).

5. Machine de récolte selon une des revendications précédentes, **caractérisée en ce que** le moyen de montée (10) s'étend au moins par endroits au-dessus d'un garde-boue (9) d'une roue (7) de la machine de récolte (1).

6. Machine de récolte selon une des revendications précédentes, **caractérisée en ce que** la machine de récolte (1) est constituée par une ensileuse ou par une moissonneuse-batteuse.

7. Machine de récolte selon une des revendications précédentes, **caractérisée en ce que** le au moins un élément d'éclairage (5, 5, 6) sert d'indicateur d'un état de fonctionnement ou de non-fonctionnement de la machine de récolte (1) ou d'un événement autre.

8. Machine de récolte selon une des revendications précédentes, **caractérisée en ce que** le au moins un élément d'éclairage (4, 5, 6) peut être mis en marche pendant une durée déterminée.

9. Machine de récolte selon une des revendications précédentes, **caractérisée en ce que** plusieurs éléments d'éclairage (4, 5, 6) peuvent être mis en marche individuellement ou en groupe.

10. Machine de récolte selon une des revendications précédentes, **caractérisée en ce que** le au moins un élément d'éclairage (4, 5, 6) peut être mis en marche par l'intermédiaire d'une télécommande.

11. Machine de récolte selon une des revendications précédentes, **caractérisée en ce que** le au moins un élément d'éclairage (4, 5, 6) peut être mis en marche dans le cadre d'une séquence programmée.
